# FASCICULE DE BREVET EUROPEEN

(11) **EP 2 477 953 B1**
(45) Date de publication et mention de la délivrance du brevet: **28.06.2017**
(21) Numéro de dépôt: 10770555.0
(22) Date de dépôt: 14.09.2010
(51) Int. Cl.: C03C 1/00, C03C 14/00, C03C 3/066, C03C 3/064, C03C 4/16, H01B 3/04, H01B 3/08

(54) **COMPOSITION ISOLANTE A BASE DE VERRE ET MICA**
ISOLIERZUSAMMENSETZUNG AUS GLAS UND GLIMMER
INSULATING COMPOSITION BASED ON GLASS AND MICA

(30) Priorité: 17.09.2009 FR 0956385; 18.05.2010 FR 1053832
(43) Date de publication de la demande: 25.07.2012
(73) Titulaire: Saint-Gobain Quartz S.A.S., 92400 Courbevoie (FR)
(72) Inventeur: MOLINS, Laurent, F-77460 Souppes Sur Loing (FR); LALANDE, Jérôme, F-94100 Saint-Maur Des Fosses (FR); LEBLAIS, Jean-Yves, F-77460 Souppes Sur Loing (FR); ARNAUD, Alix, F-92120 Montrouge (FR); DA SILVA, Claude, F-93600 Aulnay Sous Bois (FR)
(74) Mandataire: Saint-Gobain Recherche
(86) Numéro de dépôt international: PCT/FR2010/051904
(87) Numéro de publication internationale: WO 2011/033214

(56) Documents cités:
- SU-A1- 389 040
- US-A- 2 669 764
- US-A1- 2005 231 118
- US-A1- 2006 276 322
- DATABASE WPI Week 198923 Thomson Scientific, London, GB; AN 1989-169880 XP002588456, & JP 1 111772 A (OKITSUMO KK) 28 avril 1989 (1989-04-28)
- DATABASE WPI Week 198820 Thomson Scientific, London, GB; AN 1988-137190antic XP002588457, & JP 63 079740 A (MITSUBISHI DENKI KK) 9 avril 1988 (1988-04-09)

## Description

L'invention concerne une composition et un matériau comprenant un verre et du mica pour réaliser un matériau composite à matrice de verre, notamment à fin d'isolation de conducteurs électriques.

De nombreuses pièces conductrices d'électricité nécessitent d'être isolées électriquement par un isolateur électrique résistant à la chaleur et le cas échéant aux chocs ou vibrations. C'est notamment le cas des pièces électriques placées dans l'environnement moteur des locomotives de trains, notamment les rhéostats de freinage. Pour ce type d'application, l'isolant doit généralement montrer une résistance suffisante à au moins 150°C et le plus souvent au moins 200°C voire au moins 450°C. Comme autres exemples de pièces visées, on peut citer : les culots de lampes, les détecteurs de flamme, les bougies pour moteur à combustion interne, les igniters, les sondes oxygène (pour mesurer le taux d'oxygène dans les moteurs et participer à la régulation de la combustion) ou les isolateurs de câble haute tension.

Selon l'art antérieur, pour réaliser cet isolant, on utilise un matériau comprenant une matrice de borate de plomb ou de verre au plomb chargé par du mica. Les pièces sont réalisées par la succession des étapes suivantes :
- pesée et mélange des différents constituants de la mixture: verre (appelé « fritte de verre ») ou constituants permettant la synthèse du verre + mica + éventuellement alumine,
- fabrication de pastilles dudit mélange par compression uniaxiale,
- possible mise au poids des pastilles par usinage,
- possible étape de frittage des pastilles afin de leur donner une tenue mécanique,
- fusion des pastilles dans un four tournant ou à passage.
Il s'agit d'atteindre une température suffisamment au-dessus de la température de transition vitreuse (Tg) du verre, suffisamment élevée pour que la viscosité du verre (seul) soit comprise entre 1.10² et 1.10³ dPa.s. La Tg peut être mesurée par dilatométrie et correspond à la température du point supérieur de recuisson pour laquelle le logarithme décimal de la viscosité en poises (ou dPa.s) est de 13. On applique la norme NF B30-105.

Le document US2005/231118A1 enseigne une composition de verre d'isolation comprenant SiO₂, BaO, B₂O₃ et Bi₂O₃. Une charge ("filler") est présente pour améliorer les propriétés diélectriques et faciliter le moulage par pressage.

Le document US2669764A enseigne des compositions d'isolation contenant du verre et du mica présentant de bonnes propriétés diélectriques et mécaniques.

Le document DATABASE WPI Week 198923 Thomson Scientific, London, GB; AN 1989-169880XP002588456& JP1111772A (OKITSUMO KK) 28 avril 1989 (1989-04-28) suggère l'addition de mica dans des compositions de verre pour isolateur.

Le document DATABASE WPI Week 198820 Thomson Scientific, London, GB; AN 1988-137190XP002588457& JP63079740A (MITSUBISHI DENKI KK) 9 avril1988 (1988-04-09) enseigne le mélange d'une poudre de verre avec du mica pour constituer un matériau isolant à haute résistance à la corrosion et à la chaleur.

Le document US2006/276322A1 enseigne une composition de verre utilisée pour couvrir des électrodes et une pâte de verre.

Le document SU389040 enseigne un verre comprenant 25% de SiO₂, 20% de B₂O₃, 35% de BaO, 5% de Al₂O₃ et 15% de Bi₂O₃.

On distingue les procédés de compression et de transfert. Pour ces deux procédés, on utilise des pastilles chauffées du mélange. Dans le procédé en compression, on place les pastilles directement dans l'empreinte du moule et l'on procède à un pressage uniaxial. Dans le procédé de transfert, adapté à de plus petites pièces, on utilise un moule muni de canaux de transfert pour l'injection du mélange fondu. Selon ce procédé, on place les pastilles dans le moule et l'on procède à un pressage uniaxial ce qui provoque l'injection de la matière dans les canaux menant aux empreintes de moulage. Dans ces deux procédés il faut s'assurer qu'aux températures de travail, le mica ne se dégrade pas au contact de la matrice vitreuse, afin que ses propriétés mécaniques et électriques, essentielles à l'application visée, soient conservées.

Le mica est une charge minérale améliorant les propriétés électriques (notamment diélectriques) et mécaniques, et facilite le moulage. La pièce moulée à partir du mélange comprenant du mica et du verre est un matériau composite dans lequel les particules de mica sont enrobées dans une matrice du verre. On peut également ajouter au mélange une charge minérale notamment comme l'alumine, l'oxyde de strontium, la zircone, la mullite, des fibres réfractaire en verre ou céramique. Cette charge minérale reste dans la pièce finale sous forme d'inclusion au même titre que le mica. Cette charge, grâce à une Tg (température de transition vitreuse) supérieure à 600°C, ne se mélange donc pas au verre en matrice du composite lors du procédé de transformation. Les particules de cette charge peuvent éventuellement être déformées durant le procédé de transformation mais restent incluses sous forme de particules dans la pièce finale.

Les pièces composites moulées sont ensuite revêtues d'un mélange organique afin de les protéger de l'humidité et/ou des intempéries. Il accroît sensiblement la résistance d'isolement et la rigidité électrique. Dans le cas des compositions isolantes au plomb de l'art antérieur, le revêtement est du type silicone.

Le plomb étant considéré comme toxique, il convient de trouver de nouveaux verres susceptibles de remplacer ceux qui le contenaient dans le cadre de la fabrication d'isolateurs électriques. La composition d'isolateur doit présenter une résistance d'isolement sous 1 kV supérieure à 1 TΩ (Téraohm) pendant plus de 72 heures d'immersion dans de l'eau permutée.

Les frittes de verre sans plomb contenant des oxydes usuels tels que SiO₂, P₂O₅, Al₂O₃, CaO, MgO, Na₂O et K₂O n'allient pas une bonne aptitude au moulage à une température inférieure à 850°C et de préférence inférieure à 800°C (en mélange avec du mica et éventuellement de l'alumine) avec le maintien de bonnes performances électriques et mécaniques en vieillissement humide.

Notamment, certaines frittes de verre riches en alcalins (comme les Ferro GL57 ou VTR298), mélangées à 60 % en masse de mica et 5 % d'alumine (en compression), sont moulables entre 670°C et 780°C respectivement. Dans le cadre du procédé de transfert, ces mêmes frittes mélangées avec 30 % en masse de mica et 10 % d'alumine sont moulables entre 800 et 950°C. Cependant, même dans les conditions les plus favorables (i.e. avec le revêtement organique le plus performant), la résistance d'isolement ne reste supérieure au TΩ, que pendant 2 h d'immersion dans l'eau. La durabilité limitée de ces systèmes est attribuée à la très faible résistance hydrolytique de la fritte utilisée. Enfin, même avec les hauts taux d'alcalins qui les caractérisent (20 - 30 % molaire en base oxyde), le moulage ne peut être réalisé à aussi basse température qu'avec la fritte au plomb (625°C), ceci du fait d'une viscosité trop élevée.

Par ailleurs, malgré de basses températures de transition vitreuse (280°C) et de cuisson (480-490°C) lorsqu'elles sont utilisées seules, les frittes à base de phosphate d'étain du type Asahi KF9079 ou KP311, connues comme étant les moins hygroscopiques parmi les verres aux phosphates, ne sont pas moulables en mélange avec du mica voire de l'alumine dans la mesure où la matière fondue s'injecte mal dans un moule et n'épouse pas bien ses parois.

L'ajout d'une charge minérale à Tg supérieure à 600°C et de préférence l'alumine, est préféré (par exemple 5 % en masse pour le procédé en compression ; par exemple 15 % en masse pour le procédé de transfert) pour limiter les fissurations lors du moulage ou du refroidissement des pièces à base de frittes de type Ferro GL57 ou VTR298, un désaccord de dilatation thermique existant entre les mélanges liant vitreux-mica correspondants et l'acier des inserts (CTE = 17.10⁻⁶ K⁻¹).

On cherche à ce que la composition isolante présente un coefficient d'expansion thermique (CTE) le plus proche possible de l'acier, c'est-à-dire compris entre 14 et 18.10⁻⁶ K⁻¹.

Dans un certain nombre d'applications comme les rhéostats de freinage dans l'industrie ferroviaire, les pièces peuvent être soumises à des chocs thermiques (élévation de température de la température ambiante jusqu'à 200 voire 350°C en quelques secondes) et la composition isolante doit donc être particulièrement performante de ce point de vue. Ces isolateurs peuvent également être soumis aux intemperies extérieures (pluie, neige,...) provoquant ainsi de fortes contraintes de chocs thermiques.

L'invention remédie aux problèmes susmentionnés. On a maintenant trouvé un verre sans plomb (soit moins de 0,011% en mole de PbO dans le verre) présentant une basse température de moulage et une bonne tenue de résistivité dans l'eau.

Le verre utilisé dans le cadre de l'invention (dans une composition comprenant en outre du mica) comprend :
- 10 à 30 % en moles de SiO₂
- plus de 20 % et jusqu'à 40 % en moles de BaO,
- 15 à 30 % en moles de B₂O₃
la somme des teneurs en oxyde de zinc ZnO, oxyde d'alcalins R₂O et oxyde d'alcalino-terreux R'O dans le verre allant de 15 à 65% en moles, notamment 35 à 65% en moles. La définition de cette composition implique que le verre peut comprendre du ZnO ou ne pas en comprendre. La somme des teneurs en oxyde de zinc ZnO, oxyde d'alcalins R₂O et oxyde d'alcalino-terreux R'O inclut la teneur en BaO (qui est un R'O) qui doit par ailleurs être présent à raison de plus de 20 % en moles et jusqu'à 40 % en moles.

Quand on dit que le verre contient un composé, c'est à l'état solubilisé dans le verre.

Le verre contient plus de 20% en mole de BaO.

De préférence, le verre utilisé dans le cadre de l'invention contient de l'oxyde de Bismuth. Pour des raisons de coût essentiellement, on préfère en mettre le moins possible, et il est possible d'en mettre moins de 15% dans le cadre de la présente invention. Le Bi₂O₃ peut être présent à raison de 0,5 à 15 %, et de préférence de 1 à 12 % en moles. Le Bi₂O₃ est particulièrement onéreux, et l'on a vérifié que l'on peut même obtenir d'excellents résultats avec moins de 10% en mole de Bi₂O₃.

Le verre utilisé dans le cadre de l'invention peut ne pas comprendre d'oxyde d'alcalin. Il peut aussi en comprendre, généralement jusqu'à 15% en mole, sans que cela n'altère la résistance d'isolement en immersion dans l'eau. Notamment, il peut comprendre 5 à 15% en mole de Na₂O.

Le verre utilisé dans le cadre de l'invention peut comprendre un composé minéral du type oxyde à Tg supérieure à 600°C, notamment l'alumine Al₂O₃, généralement de 0 à 5 % et de préférence de 1 à 5 % en mole de composé minérale. Ce composé est solubilisé dans le verre de départ et est donc à bien distinguer de la charge minérale introduite à côté du verre dans la composition selon l'invention.

Le verre utilisé dans le cadre de l'invention peut comprendre de l'oxyde de lanthane, et dans ce cas, généralement de 0 à 6 % en mole de La₂O₃.

Le verre selon l'invention peut comprendre de l'oxyde de Lithium ou ne pas en comprendre. De préférence la somme de la teneur en mole en Li₂O et de la teneur en mole en B₂O₃ est inférieure à 45% en moles. L'oxyde de Lithium (Li₂O) peut dans certain cas être à l'origine de problèmes de corrosion de réfractaires lors de la fusion de la fritte auquel cas on peut préférer baisser son taux à moins de 15% en mole, voire moins de 10% en mole, voire moins de 8% en mole.

Le verre utilisé dans le cadre de l'invention peut comprendre jusqu'à environ 8 % en mole de fluor (compté pour le F élémentaire), sous forme par exemple de cryolithe ou de fluorure de baryum ou de calcium, en tant que fluidifiant et qui altère peu la durabilité. Cet ajout permet également de diminuer la viscosité du mélange verre/charge minérale représentant une baisse de température de l'ordre de 50°C et également la température de moulage du mélange comprenant le verre et le mica.

Le verre selon l'invention est mis en oeuvre dans le cadre d'une composition isolante (verre + mica) dans le cadre du procédé de compression ou de transfert généralement dans les proportions suivantes :
- 35 à 75 % et de préférence de 45 à 65 % en masse de verre,
- 20 à 65 % et de préférence de 25 à 55 % en masse de mica,
- 0 à 15 % et de préférence de 4 à 12 % en masse de charge minérale à Tg supérieure à 600°C.

Le verre selon l'invention est mis en oeuvre dans le cadre d'une composition isolante (verre + mica) dans le cadre du procédé de compression de préférence dans les proportions suivantes :
- 35 % à 65 % en masse et de préférence de 45 à 55 % de verre
- 25 à 65 % en masse et de préférence de 45 à 55 % de mica
- 0 à 15 % et de préférence de 4 à 8 % de charge minérale à Tg supérieure à 600°C.

Le verre selon l'invention est mis en oeuvre dans le cadre d'une composition isolante (verre + mica) pour le procédé de transfert de préférence dans les proportions suivantes:
- 45 % à 75 % de préférence de 55 à 65 % de verre
- 20 à 40 % de préférence de 25 à 35 % de mica
- 0 à 15 % de préférence de 8 à 12 % de charge minérale à Tg supérieure à 600°C.

De préférence, l'éventuelle alumine utilisée en tant que charge minérale à Tg supérieure à 600°C (charge non-incluse dans le verre de départ), est une alumine calcinée comme la AC45 de Alcan (procédés de transfert et de compression).

L'invention concerne la composition pulvérulente à l'état de mélange des poudres (fritte de verre + mica + éventuellement une charge minérale à Tg supérieure à 600°C) et le procédé d'obtention d'un matériau par traitement thermique (faisant fondre le verre généralement à moins de 1200°C, généralement entre 600 et 1100°C) puis le refroidissement de la composition pulvérulente. Ainsi, l'invention concerne également le procédé d'obtention d'un matériau composite comprenant des particules de mica et une matrice de verre, comprenant le traitement thermique d'une composition de l'une des revendications précédentes à l'état pulvérulent ledit traitement thermique ayant lieu à une température telle que la viscosité du verre soit comprise entre 1.10² et 1.10³ dPa.s. Dans la composition pulvérulente, le mica (diamètre équivalent moyen allant de 100 à 600 µm) et le verre (diamètre équivalent moyen allant de 20 à 300 µm) sont sous forme de poudre ou particules. Selon la température de mise en oeuvre, il peut y avoir une interdiffusion d'éléments aux interfaces entre les charges (surtout le mica) et la matrice en verre. Globalement, et surtout pour les basses températures de mise en oeuvre, le verre entre les particules de mica et éventuellement entre les particules de charge minérale à Tg supérieure à 600°C conserve la composition qu'il avait à l'état de fritte. L'invention concerne également la composition sous forme de matériau composite dont le verre forme la matrice entourant les particules de mica et éventuellement d'une autre charge minérale.

Une pièce formée à partir de la composition isolante (verre + mica) selon l'invention est revêtue d'un revêtement organique. Le revêtement organique est généralement du type polysiloxane ou époxy ou polyuréthane ou polysilazane. Pour le cas d'un isolateur non soumis directement aux intempéries, on applique un revêtement dérivant de préférence d'un silane hydrophobe de type alkylalcoxysilane ou fluorosilane et plus particulièrement le n-Octyltriethoxysilane (alkyl Dynasylan® OCTEO), qui permet de conserver les propriétés de résistance d'isolement dans des atmosphères à plus de 50 % d'humidité relative et notamment à plus de 93 % d'humidité relative. Un alkylalcoxysilane est hydrolysé en surface et il en dérive un polysiloxane formant le revêtement. Le silane est utilisé pur, ou en solution aqueuse ou alcoolique, et appliqué par immersion de l'objet moulé, sans besoin de nettoyage de l'éventuel insert (métallique ou en céramique) après l'opération. Le revêtement est ensuite séché par traitement thermique (généralement entre 80 et 170°C). Le temps d'hydrolyse et la température de réticulation (généralement de 15°C à 250°C) peuvent être optimisés pour atteindre les performances souhaitées en immersion dans l'eau. Les silanes suivants séchés à une température de 150°C donnent également d'excellents résultats:
- alkyl Dynasylan® IBTEO isobutyltriethoxysilane
- Dynasylan® SIVO CLEAR hydro-/oleophobic treatment, 2-component dans l'alcool.
Sont également possibles comme silanes:
- SIVO 160 (commercialisé par Evonik) qui est un sol gel préréticulé en phase aqueuse
- SICO-CLEAR fluoroalkylsilane bi-composants en phase solvent.

D'autres types d'agent de couplage tels que les organophosphonates, les acides organophosphoniques, les organotitanates, organozirconates et organozircoaluminates sont envisageables. Tous ces addititifs ont la possibilité de se greffer (comme les silanes) à la surface de la fritte de verre.

Pour le cas d'un isolateur exposé aux intempéries, on préfère un revêtement de type époxyde (« époxy » est une contraction de « époxyde »), et notamment les systèmes à base de résine époxy cycloaliphatique. Ce revêtement époxyde est de préférence appliqué après silanisation de la surface par un silane aminé du type A1100 ou A1161 de chez Osi-Momentive, ou un silane époxyde du type Dynasylan GLYMO 3-glycidyloxypropyl-trimethoxysilane de chez Evonik. L'époxyde est par exemple l'Araldit CY 184 (poids en équivalent époxy de 5,8 à 6,1 équivalents/kg ou encore de manière optimale un mélange CY184 + PY 307 + HY1235 45%-5%-50% de résine Huntsmann) qui permet une mise en oeuvre aisée de par sa faible viscosité à 25°C (700 à 900 mPa.s) et une durée de vie en pot (pot life) supérieure à 3 jours. De plus, elle assure une conservation des propriétés d'isolement sur une durée supérieure à 72 h dans l'eau désionisée. Cette résine est réticulée à l'aide d'un durcisseur d'anhydride cycloaliphatique. Par exemple, l'Aradur HY 1235 Huntsmann donne d'excellents résultats. Ces produits résine/durcisseur sont généralement utilisés dans les ratios 30/70, 40/60, 50/50, 60/40 ou 70/30. La résine époxy, le durcisseur et le catalyseur sont mélangés selon les ratios choisis. La formulation organique est appliquée par immersion de l'isolateur électrique sous vide ou non. La résine organique est alors réticulée sous pression (autoclave) ou non, par traitement thermique (généralement 80 à 160 °C). La viscosité de la formulation organique peut être réglée par l'utilisation d'un diluant réactif. Pour la température de réticulation on peut aller de 15 °C à 220°C.

Un revêtement organique bien adapté aux isolateurs exposés ou non aux intempéries est un polysilazane commercialisé sous la référence HTT 1800 par Clariant.

Les frittes de verre et revêtements organiques utilisés dans le cadre de la présente invention sont exempts de métaux lourds, compatibles ensemble, compatibles avec l'acier des inserts et la charge minérale (structure sans grandes cavités ni fissures après vieillissement humide), assurant de bonnes performances électriques, mécaniques et thermiques, y compris après immersion 3 jours dans l'eau permutée, durée de test reconnue suffisante pour garantir une longévité supérieure ou égale à 20 ans en service.

Le verre utilisé dans le cadre de l'invention trouve aussi une utilité en tant que matériau d'étanchéité, colle, matériau de scellement, matériau de revêtement de composants électroniques, notamment pour les panneaux électroniques d'affichage, en particulier les écrans plasma (PDP), les émissions par effet de champ (Field Emission Display FED), les afficheurs fluorescents sous Vide (Vacuum Fluorescent Display (VFD), les tubes à rayons cathodiques (CRT), dans les couches diélectriques et les couches isolantes, les matériaux de fabrication des barrières Rib, les substrats de microélectronique. Le verre selon l'invention est aussi utilisable aussi pour les matériaux des paquets composants électroniques en cristal, pour les têtes magnétiques à deux noyaux, et pour le curseur et le noyau magnétique, comme matrice d'émaux à basse température de cuisson.

Dans les exemples qui suivent, on a détermïné :
- la température de moulage Tm par approche expérimentale en faisant varier les températures de moulage de 10°C en 10°C. Les valeurs indiqués correspondent aux valeurs permettant d'obtenir des rendements de pièces supérieures à 90 % (taux de rebut inférieur à 10%) sur la base d'une observation visuelle de la qualité du moulage.
- Il faut noter que la température des inserts (250 à 400°C) ainsi que la température du moule sont important (290°C à 450°C) à respecter ;
- la durée Di au bout de laquelle la résistance d'isolement devient inférieure à 1 TΩ après immersion dans de l'eau désionisée., Cette résistance d'isolement est mesurée à l'aide d'un MegOhmmeter CHAUVIN ARNOUX CA 6547 sous 2500 V.

Le tableau 1 indique la formulation des frittes de verre pour les différents exemples et les résultats obtenus au niveau de compositions isolantes comprenant 48% en masse de fritte de verre, 4 % en masse d'alumine, 48 % en masse de mica. Dans tous les exemples, la teneur en PbO dans la fritte était inférieure à 0,011 % en mole. Les résultats sont rassemblés dans le tableau 1 en termes de température de moulage (noté «Tm» et exprimée en °C) et de durée d'immersion (noté Di et exprimée en Jours) dans l'eau désionisée.

Les exemples 1 à 3 illustrent l'invention. Les verres utilisés mènent à des températures de moulages inférieures à 800°C et des durées d'immersion satisfaisantes. Les exemples 4 à 19 sont comparatifs.

L'objet de la présente invention consiste également en la réalisation d'isolateurs à longue ligne de fuite (« creeping distance » en anglais) à partir de **la** composition comprenant du verre et du mica selon l'invention. Le terme « ligne de fuite » est approprié pour désigner la distance développée (c'est-à-dire du profil de surface, en suivant le contour) entre les deux plans les plus éloignés de l'isolant d'un isolateur contenant deux inserts métalliques. Ce paramètre est important car il permet de tenir compte de la probabilité d'occurrence de décharges partielles le long des surfaces de l'isolateur. La ligne de fuite dépend des tensions électriques efficaces et des tensions électriques crêtes dans l'utilisation finale.

L'objet de la présente invention concerne également des isolateurs moulés à partir de compositions verre/mica sans plomb selon l'invention et présentant des lignes de fuite tel que définies dans le tableau 2 suivant, la longueur de ligne de fuite étant toujours supérieure à la hauteur de l'isolateur.

**Tableau 2**

| Hauteur Min mm | Hauteur Max mm | Ligne de fuite Min mm | Ligne de fuite Max mm |
|---|---|---|---|
| 35 | 50 | 45 | 85 |
| 50 | 60 | 65 | 250 |
| 60 | 90 | 120 | 300 |
| 90 | 110 | 130 | 350 |

Ainsi, le rapport de la longueur de ligne de fuite sur la hauteur de l'isolateur va généralement de 1,2 à 4. L'invention permet donc l'obtention d'un rapport de la longueur de ligne de fuite sur la hauteur de l'isolateur d'au moins 1,55 , ce qui est considéré comme étant particulièrement difficile à réaliser. La « hauteur » de l'isolateur est la distance du segment de droite entre les deux points de l'isolateur les plus proches et tels que chacun de ces points est un point en contact à la fois avec l'isolateur, un insert (différent de l'autre point) et l'atmosphère. Pour l'homme du métier, c'est aussi la distance entre la partie haute et la partie basse de l'isolateur. La ligne de fuite est la distance reliant ces mêmes points mais en parcourant la surface de l'isolateur.

Les compositions verre/mica (+ éventuelle charge minérale) selon l'invention peuvent trouver une utilisation en tant qu'isolateur dans au moins l'une des fonctions suivantes :
- support de rhéostats de freinage,
- isolation de câble à haute tension (généralement supérieure à 5 KV),
- support de résistance de puissance,
- isolateur et support pour moteur électrique de puissance,
- borne de raccordement de moteur électrique,
- isolement de cage recevant les balais d'un moteur électrique,
- commande de disjonction de poteau électrique,
- support de câble d'alimentation électrique,
- cales ou support isolant pour application HF (haute fréquence),
- isolement de rail de captage de courant industriel,
- support ou raccordement d'élément chauffant,
- support ou isolement de dispositif de captage de courant électrique de 3ème rail pour véhicule à énergie électrique (métro, tramway, train, etc)
- isolation d'ensemble redresseur de puissance,
- isolation de sectionneur à forte puissance,
- borne de raccordement de transformateur,
- traversée de paroi pour transmission de courant électrique,
- support ou isolation de système pantographe
- allumeurs gaz (« igniteur » en anglais),
- sondes à oxygène,
- capteur de pression et/ou de température,
- porte-filament électrique (généralement en tungstène),
- plaque en équipement de laboratoire,
- équipement (isolateur) de canon à électrons,
- systèmes thermiques et/ou électriques dans l'automobile (comme sondes de mesure de température),
- systèmes de dégivrage aéronautique (protection d'une résistance électrique),
- systèmes de décharges CORONA,
- systèmes de lampe haute température (par exemple comme culot de lampe halogène),
- support de piles à combustibles
- pièces de contact avec le verre pouvant être chaud, comme à sa température de ramollissement, notamment lors du bombage du verre.

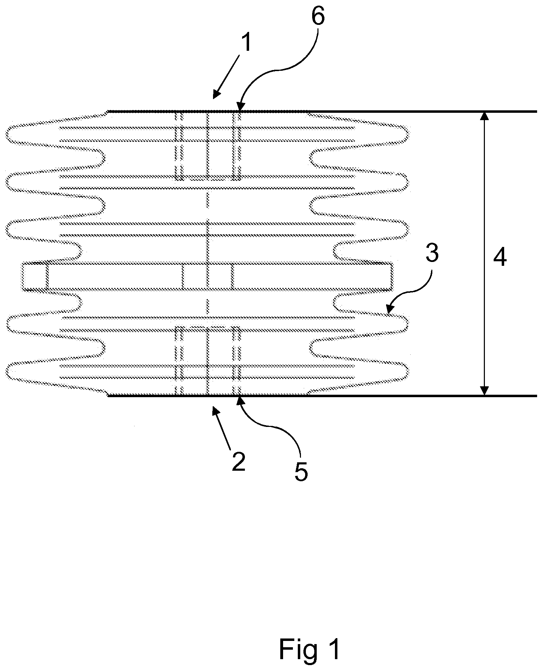

La figure 1 représente un isolateur à longue ligne de fuite. Cet isolateur comprend deux orifices 1 et 2 dans lesquels on peut visser deux inserts métalliques. La surface externe 3 de l'isolateur présente une surface très ondulée afin d'augmenter la longueur de sa ligne de fuite, bien plus longue que sa hauteur 4. On a représenté en 5 et 6 deux points les plus proches et tels que chacun de ces points est un point en contact à la fois avec l'isolateur, un insert (différent de l'autre point) et l'atmosphère.

**Tableau 1**

| **ex n°** | **SiO2** | **BaO** | **B2O3** | **Bi2O3** | **ZnO** | **Li2O** | **Al2O3** | **Na2O** | **MgO** | **K2O** | **CaO** | **SrO** | **ZnO+ R2O+R'O** | **Tm (°C)** | **Di (J)** |
|---|---|---|---|---|---|---|---|---|---|---|---|---|---|---|---|
| 1 | 21,55% | 36,62% | 28,07% | 10,87% | 0,00% | 0,00% | 2,90% | 0,00% | 0,00% | 0,00% | 0,00% | 0,00% | 36,62% | **750** | **6** |
| 2 | 18,26% | 30,87% | 23,84% | 5,71% | 10,26% | 0,00% | 2,46% | 7,70% | 0,00% | 0,00% | 0,00% | 0,00% | 48,83% | **720** | **6** |
| 3 | 16,80% | 28,40% | 21,93% | 3,72% | 13,48% | 0,00% | 2,26% | 12,39% | 0,00% | 0,00% | 0,00% | 0,00% | 54,27% | **720** | **6** |
| 4 | 19,28% | 9,94% | 19,39% | 0,00% | 0,00% | 28,57% | 0,00% | 0,00% | 0,00% | 0,00% | 22,83% | 0,00% | 61,34% | **750** | **1** |
| 5 | *24,53%* | *34,37%* | *36,19%* | *0,00%* | *0,00%* | *0,00%* | *4*,*91*% | *0,00%* | *0,00%* | *0,00%* | *0,00%* | *0,00%* | *34,37%* | ***850*** | **2** |
| *6* | *24,57%* | *17,18%* | *36,21%* | *0,00%* | *17,11%* | *0,00%* | *4,94%* | *0,00%* | *0,00%* | *0,00%* | *0,00%* | *0,00%* | *34,29%* | ***850*** | **2** |
| *7* | *24,62%* | *17,17%* | *36*,*14*% | *0,00%* | *0,00%* | *0,00%* | *4,91%* | *0,00%* | *0,00%* | *0,00%* | *17,16%* | *0,00%* | *34,33%* | ***1000*** | - |
| *8* | *43,62%* | *0,09%* | *13*,*13*% | *0,00%* | *18,38%* | *0,00%* | *1,51%* | *18,50%* | *0,07%* | *0,04%* | *0,12%* | *0,13%* | *37,33%* | ***1000*** | - |
| *9* | *57*,*23*% | *15,39%* | *0,33%* | *0,00%* | *0*,*30*% | *0*,*01*% | *10*,*11*% | *1,56%* | *0,60%* | *5,39%* | *8,33%* | *0,54%* | *32,12%* | ***1000*** | - |
| *10* | *56*,*82*% | *0,03%* | *11,34%* | *0,00%* | *1,13%* | *0,04%* | *7,41%* | *4,87%* | *0,65%* | *2,58%* | *12*,*64*% | *2*,*34*% | *24,28%* | ***1000*** | - |
| *11* | *58,59%* | *0,03%* | *10,08%* | *0,00%* | *0,16%* | *0*,*01*% | *8*,*11*% | *7,29%* | *0,96%* | *2,33%* | *12,32%* | *0,02%* | *23,12%* | ***1000*** | - |
| *12* | *60,44%* | *0,02%* | *10,51%* | *0,00%* | *0,47%* | *0,75%* | *8,26%* | *3*,*11*% | *1,91%* | *1*,*71*% | *11,46%* | *1,30%* | *20,73%* | ***1000*** | - |
| *13* | *58,05%* | *0,02%* | *31*,*24*% | *0,00%* | *0,08%* | *0,52%* | *0,67%* | *7*,*87*% | *0,05%* | *0,33%* | *0,78%* | *0,00%* | *9*,*65*% | ***750*** | ***0,5*** |
| *14* | *66,80%* | *0,04%* | *20,10%* | *0,03%* | *0,06%* | *0,11%* | *5,72%* | *5,48%* | *0,32%* | *0,41%* | *0,69%* | *0,00%* | *7,11%* | ***1000*** | - |
| *15* | *39,19%* | *3,34%* | *29,80%* | *0,00%* | *0,16%* | *4,83%* | *6,05%* | *1,06%* | *2,28%* | *0,28%* | *12,51%* | *0,13%* | *24,59%* | ***870*** | ***1*** |
| *16* | *48*,*36*% | *0,03%* | *24,01%* | *0,00%* | *0,00%* | *0,02%* | *3,98%* | *19,13%* | *0,05%* | *2,53%* | *1,84%* | *0,00%* | *23,60%* | ***800*** | ***0*,*5*** |
| *17* | *37,87%* | *0, 00%* | *36,38%* | *0,00%* | *0,00%* | *0,00%* | *4,34%* | *0,00%* | *0,00%* | *0,00%* | *21*,*41*% | *0,00%* | *21,41%* | ***900*** | ***0,5*** |
| *18* | *18,00%* | *30,00%* | *34,00%* | *4,00%* | *14*,*00*% | *0,00%* | *0,00%* | *0,00%* | *0,00%* | *0,00%* | *0,00%* | *0,00%* | *44,00%* | ***850*** | ***0,5*** |
| *19* | *15*,*00*% | *30,00%* | *34,00%* | *4,00%* | *14,00%* | *0,00%* | *3,00%* | *0,00%* | *0,00%* | *0,00%* | *0,00%* | *0,00%* | *44,00%* | ***850*** | ***0,5*** |

## Revendications

1. Composition comprenant 35 à 75% en masse de verre, 20 à 65% en masse de mica et 0 à 15% en masse d'une charge minérale à Tg supérieure à 600°C, **caractérisé en ce que** ledit verre comprend :
- 10 à 30 % en moles de SiO₂,
- plus de 20 % et jusqu'à 40 % en moles de BaO,
- 15 à 30 % en moles de B₂O₃,
la somme des teneurs en oxyde de zinc, oxyde d'alcalin et oxyde d'alcalino-terreux dans le verre allant jusqu'à 65% en moles.

2. Composition selon la revendication précédente, **caractérisée en ce qu'**elle comprend 45 à 65% en masse de verre, 25 à 55% en masse de mica et 4 à 12% en masse d'alumine en tant que charge minérale à Tg supérieure à 600°C.

3. Composition selon l'une des revendications précédentes, **caractérisée en ce que** le verre comprend 0,5 à 15% en mole de Bi₂O₃.

4. Composition selon la revendication précédente, **caractérisée en ce que** le verre comprend de 1 à 12 % en mole de Bi₂O₃.

5. Composition selon l'une des revendications précédentes, **caractérisée en ce que** le verre comprend 5 à 15% en mole de Na₂O.

6. Composition selon l'une des revendications précédentes, **caractérisée en ce que** le verre comprend 1 à 5% en mole d'Al₂O₃.

7. Composition selon l'une des revendications précédentes, **caractérisée en ce que** le verre comprend moins de 0,011% en mole de PbO.

8. Composition selon l'une des revendications précédentes, **caractérisée en ce que** le verre comprend moins de 15% en mole de Li₂O, voire moins de 10% en mole de Li₂O, voire moins de 8% en mole de Li₂O.

9. Procédé d'obtention d'un matériau composite comprenant des particules de mica et une matrice de verre, comprenant le traitement thermique d'une composition de l'une des revendications précédentes à l'état pulvérulent ledit traitement thermique ayant lieu à une température telle que la viscosité du verre soit comprise entre 1.10² et 1.10³ dPa.s.

10. Matériau susceptible d'être obtenu par le procédé de la revendication précédente.

11. isolateur électrique comprenant le matériau de la revendication précédente.

12. Isolateur selon la revendication précédente, **caractérisé en ce qu'**il comprend une surface ondulée.

13. Isolateur selon l'une des deux revendications précédentes, **caractérisé en ce que** le rapport de la longueur de la ligne de fuite sur la hauteur de l'isolateur est supérieure à 1,55.

14. isolateur selon l'une des revendications d'isolateur précédentes **caractérisé en ce que** la surface du matériau est recouverte d'un revêtement organique.

15. Isolateur selon la revendication précédente **caractérisé en ce que** le revêtement est du type polysiloxane ou époxy ou polyuréthane ou polysilazane.

16. Isolateur selon la revendication précédente **caractérisé en ce que** le revêtement dérive de l'hydrolyse d'un alkylalcoxysilane.

17. utilisation de l'isolateur de l'une des revendications d'isolateur précédentes dans l'une des fonctions suivantes :
- support de rhéostats de freinage,
- isolation de câble à haute tension,
- support de résistance de puissance,
- isolateur et support pour moteur électrique de puissance,
- borne de raccordement de moteur électrique,
- isolement de cage recevant les balais d'un moteur électrique,
- commande de disjonction de poteau électrique,
- support de câble d'alimentation électrique,
- cales ou support isolant pour application HF (haute fréquence),
- isolement de rail de captage de courant industriel,
- support ou raccordement d'élément chauffant,
- support ou isolement de dispositif de captage de courant électrique de 3ème rail pour véhicule à énergie électrique
- isolation d'ensemble redresseur de puissance,
- isolation de sectionneur à forte puissance,
- borne de raccordement de transformateur,
- traversée de paroi pour transmission de courant électrique,
- support ou isolation de système pantographe
- allumeurs gaz,
- sondes à oxygène,
- capteur de pression et/ou de température,
- porte-filament électrique,
- plaque en équipement de laboratoire,
- équipement de canon à électrons,
- systèmes thermiques et/ou électriques dans l'automobile,
- systèmes de dégivrage aéronautique,
- systèmes de décharges CORONA,
- systèmes de lampe haute température,
- support de piles à combustibles,
- pièces de contact avec le verre.

## Patentansprüche

1. Zusammensetzung, umfassend 35 bis 75 Gew. % Glas, 20 bis 65 Gew.% Glimmer und 0 bis 15 Gew.% eines mineralischen Füllstoffs mit einem Tg-Wert von mehr als 600°C, **dadurch gekennzeichnet, dass** das Glas Folgendes umfasst:
- 10 bis 30 Mol-% SiO₂,
- mehr als 20 und bis zu 40 Mol-% BaO,
- 15 bis 30 Mol-% B₂O₃,
wobei die Summe der Gehalte an Zinkoxid, Alkalioxid und Erdalkalioxid in dem Glas bis zu 65 Mol-% beträgt.

2. Zusammensetzung nach dem vorangehenden Anspruch, **dadurch gekennzeichnet, dass** sie 45 bis 65 Gew. % Glas, 25 bis 55 Gew.% Glimmer und 4 bis 12 Gew.% Aluminiumoxid als mineralischen Füllstoff mit einem Tg-Wert von mehr als 600°C umfasst.

3. Zusammensetzung nach einem der vorangehenden Ansprüche, **dadurch gekennzeichnet, dass** das Glas 0,5 bis 15 Mol-% Bi₂O₃ umfasst.

4. Zusammensetzung nach dem vorangehenden Anspruch, **dadurch gekennzeichnet, dass** das Glas 1 bis 12 Mol-% Bi₂O₃ umfasst.

5. Zusammensetzung nach einem der vorangehenden Ansprüche, **dadurch gekennzeichnet, dass** das Glas 5 bis 15 Mol-% Na₂O umfasst.

6. Zusammensetzung nach einem der vorangehenden Ansprüche, **dadurch gekennzeichnet, dass** das Glas 1 bis 5 Mol-% Al₂O₃ umfasst.

7. Zusammensetzung nach einem der vorangehenden Ansprüche, **dadurch gekennzeichnet, dass** das Glas 0,011 Mol-% PbO umfasst.

8. Zusammensetzung nach einem der vorangehenden Ansprüche, **dadurch gekennzeichnet, dass** das Glas weniger als 15 Mol-% Li₂O, oder weniger als 10 Mol-% Li₂O, oder weniger als 8 Mol-% Li₂O umfasst.

9. Verfahren zur Herstellung eines Glimmerteilchen und eine Glasmatrix umfassenden Verbundmaterials, umfassend die Wärmebehandlung einer Zusammensetzung nach einem der vorangehenden Ansprüche im pulverförmigen Zustand, wobei die Wärmebehandlung bei einer solchen Temperatur stattfindet, dass die Viskosität des Glases zwischen 1.10² und 1.10³ dPa.s liegt.

10. Material, erhältlich durch das Verfahren des vorangehenden Anspruchs.

11. Elektrischer Isolator, der das Material des vorangehenden Anspruchs umfasst.

12. Isolator nach dem vorangehenden Anspruch, **dadurch gekennzeichnet, dass** er eine gewellte Oberfläche umfasst.

13. Isolator nach einem der beiden vorangehenden Ansprüche, **dadurch gekennzeichnet, dass** das Verhältnis der Länge der Fluchtlinie zu der Höhe des Isolators mehr als 1,55 beträgt.

14. Isolator nach einem der vorangehenden Ansprüche bezüglich eines Isolators, **dadurch gekennzeichnet, dass** die Oberfläche des Materials mit einem organischen Überzug beschichtet ist.

15. Isolator nach dem vorangehenden Anspruch, **dadurch gekennzeichnet, dass** der Überzug vom Typ Polysiloxan oder Epoxid oder Polyurethan oder Polysilazan ist.

16. Isolator nach dem vorangehenden Anspruch, **dadurch gekennzeichnet, dass** der Überzug aus der Hydrolyse eines Alkylalkoxysilans stammt.

17. Verwendung des Isolators gemäß einem der vorangehenden Ansprüche bezüglich eines Isolators in einer der folgenden Funktionen:
- Halter von Brems-Rheostaten,
- Isolieren von Hochspannungskabeln,
- Halter von Leistungswiderständen,
- Isolator und Halter für Hochleistungselektromotoren,
- Anschlussklemme von Elektromotoren,
- Isolation eines die Bürsten eines Elektromotors aufnehmenden Schachtes,
- Steuern der Unterbrechung von Strommasten,
- Träger von Stromversorgungskabeln,
- isolierende Unterlage oder Isolationsträger für HF-Anwendungen (Hochfrequenz),
- Isolation von Schienen zur industriellen Stromabnahme,
- Träger oder Anschluss eines Heizelementes,
- Träger oder Isolation einer Stromabnehmervorrichtung der dritten Schiene von Elektrofahrzeugen,
- Isolation von Leistungsstromrichter-Baueinheiten,
- Isolation von Hochleistungstrennschaltern,
- Anschlussklemme von Transformatoren,
- Wanddurchführung für Übertragung von elektrischem Strom,
- Tragen oder Isolieren von Stromabnehmersystemen,
- Gaszünder,
- Sauerstoffsonden,
- Druck- und/oder Temperatursensor,
- elektrischer Drahtträger,
- Platte in Laborausrüstung,
- Ausrüstung von Elektronenkanonen,
- thermische und/oder elektrische Systeme in Automobilen,
- Enteisungssysteme der Luftfahrtindustrie,
- Koronaentladungssysteme,
- Systeme von Hochtemperaturleuchten,
- Träger von Brennstoffzellen,
- Kontaktstücke mit Glas.

## Claims

1. A composition comprising 35 to 75% by weight of glass, 20 to 65% by weight of mica and 0 to 15% by weight of a mineral filler with a Tg above 600°C, **characterized in that** said glass comprises:
- 10 to 30 mol% of SiO₂
- more than 20% and up to 40 mol% of BaO
- 15 to 30 mol% of B₂O₃,
the sum of the concentrations of zinc oxide, alkali metal oxide and alkaline earth oxide in the glass extending up to 65 mol%.

2. The composition as claimed in the preceding claim **characterized in that** it comprises 45 to 65% by weight of glass, 25 to 55% by weight of mica and 4 to 12% by weight of alumina as a mineral filler with a Tg above 600°C.

3. The composition as claimed in one of the preceding claims, **characterized in that** the glass contains 0.5 to 15 mol% of Bi₂O₃.

4. The composition as claimed in the preceding claim, **characterized in that** the glass contains 1 to 12 mol% of Bi₂O₃ oxide.

5. The composition as claimed in one of the preceding claims, **characterized in that** the glass contains 5 to 15 mol% of Na₂O.

6. The composition as claimed in one of the preceding claims, **characterized in that** the glass contains 1 to 5 mol% of Al₂O₃.

7. The composition as claimed in one of the preceding claims, **characterized in that** the glass contains less than 0.011 mol% of PbO.

8. The composition as claimed in one of the preceding claims, **characterized in that** the glass contains less than 15 mol% of Li₂O, or even less than 10 mol% of Li₂O, or even less than 8 mol% of Li₂O.

9. A method for obtaining a composite material comprising mica particles and a glass matrix, comprising the heat treatment of a composition of one of the preceding claims in the powdered state, said heat treatment taking place at a temperature such that the viscosity of the glass lies between 1×10² and 1×10³ dPa.s.

10. A material capable of being obtained by the method of the preceding claim.

11. An electrical insulator comprising the material of the preceding claim.

12. The insulator as claimed in the preceding claim, **characterized in that** it has an undulating surface.

13. The insulator as claimed in one of the two preceding claims, **characterized in that** the length of the creeping distance to the height of the insulator is greater than 1.55.

14. The insulator as claimed in one of the preceding insulator claims, **characterized in that** the surface of the material is covered with an organic coating.

15. The insulator as claimed in the preceding claim, **characterized in that** the coating is of the polysiloxane, or epoxy or polyurethane or polysilazane type.

16. The insulator as claimed in the preceding claim, **characterized in that** the coating is derived from the hydrolysis of an alkylalkoxysilane.

17. The use for the insulator of one of the preceding insulator claims in one of the following functions:
- support for brake rheostats,
- high voltage cable insulation,
- power resistance support,
- insulator and support for electric power motor,
- connecting terminal for an electric motor,
- cage insulation receiving the brushes of an electric motor,
- circuit breaker control for electric pylon,
- electricity supply cable support,
- spacers or insulating support for applying HF (high frequency),
- insulation for industrial current pick-up rail,
- support or connection for heating element,
- support or insulation for an electric current pick-up device from the 3^{rd} rail for a vehicle run on electrical power,
- insulation for a power rectifier assembly,
- insulation for high power switch,
- transformer connecting terminal,
- wall bushing for transmission of an electric current,
- support or insulation for a pantograph system,
- gas igniters,
- oxygen probes,
- pressure and/or temperature sensor,
- carrier for an electric filament,
- plate in laboratory equipment,
- equipment for electron gun,
- thermal and/or electrical systems in an automobile,
- aeronautical de-icing systems
- corona discharge systems,
- high temperature lamp systems,
- support for fuel cells,
- parts in contact with glass.
